# EUROPÄISCHE PATENTSCHRIFT

(11) **EP 0 389 077 B1**
(45) Veröffentlichungstag und Bekanntmachung des Hinweises auf die Patenterteilung: **24.07.1996**
(21) Anmeldenummer: 90250074.3
(22) Anmeldetag: 19.03.1990
(51) Int. Cl.: G06F 7/02, H04L 12/26

(54) **Verfahren zur Untersuchung eines digitalen Datenstroms**
Method for analysing a digital datastream
Procédé d'analyse d'un flux de données numériques

(30) Priorität: 21.03.1989 DE 3909775
(43) Veröffentlichungstag der Anmeldung: 26.09.1990
(73) Patentinhaber: SIEMENS AKTIENGESELLSCHAFT, 80333 München (DE)
(72) Erfinder: Margaris, Panajotis, D-1000 Berlin 27 (DE); Vehse, Andreas, D-1000 Berlin 48 (DE)

(56) Entgegenhaltungen:
- HEWLETT-PACKARD JOURNAL. Juli 1985, PALO ALTO US Seiten 12 - 18; WITT ET ALL: 'Simple Architecture Provides High Performance for Protocol Analysis'

## Beschreibung

Aus dem Aufsatz "Simple Architecture Provides High Performance for Protocol Analysis", Hewlett Packard Journal, Juli 1985, Seite 12 ff. ist ein Verfahren zur Untersuchung eines digitalen Datenstromes bekannt. Sei diesem Verfahren wird der zu untersuchende digitale Datenstrom byteweise in Untereinheiten unterteilt. Eine Untereinheit besteht somit aus 8 Bits, durch deren Inhalte und Wertigkeiten der Wert der Untereinheit definiert ist. Innerhalb eines Verfahrenszyklus′ erfolgt jeweils die Untersuchung einer Untereinheit (Byte). Zur Untersuchung einer jeden Untereinheit wird zunächst aus einem ersten Speicherbaustein ein Masken-Byte abgerufen und durch logische UND-Verknüpfung mit der zu untersuchenden Untereinheit verknüpft, bevor das Ergebnis dieser Verknüpfung mit einem aus einem zweiten Speicherbaustein abgerufenen Referenzwert-Byte verglichen wird. Aus einem dritten Speicherbaustein werden Anwenderbefehle bereitgestellt, mit denen u. a. festgelegt wird, hinsichtlich welcher Kriterien das Vergleichsergebnis abgefragt werden soll. Als Kriterien stehen das Kriterium "gleich" und das Kriterium "ungleich" zur Verfügung. Erfüllt eine Untereinheit das geforderte Vergleichskriterium und ist beispielsweise diese Untereinheit eine erste zu erkennende Untereinheit einer Folge von Untereinheiten eines digitalen Datenstroms, so wird eine Ausgangsinformation (link Bit) erzeugt, die so lange aufrechterhalten bzw. von Verfahrenszyklus zu Verfahrenszyklus weitergegeben wird, wie auch die folgenden Untereinheiten die jeweils vorgebbaren Vergleichskriterien erfüllen. Entspricht die im gerade ablaufenden Verfahrenszyklus untersuchte Untereinheit vom Typ (z. B. Data Terminal Equipment / DTE) her nicht dem durch den Referenzwert vorgegebenen Typ (z. B. Data Link Control / DLC), so bleibt die Ausgangsinformation unverändert. Wird ein Vergleichskriterium von einer folgenden, untersuchten Untereinheit nicht erfüllt, wird kein Ausgangssignal mehr erzeugt, und der Untersuchungsvorgang ist damit abgebrochen. Erfüllt die durch Anwenderbefehl festgelegte letzte Untereinheit einer Folge von Untereinheiten das Vergleichskriterium, wird eine entsprechende Meldung (trigger found) ausgegeben.

Bei diesem bekannten Verfahren ist es nicht möglich, eine durch Anwenderbefehle bestimmbare Anzahl von Untereinheiten für die Untersuchung unberücksichtigt zu lassen. Außerdem ist nur eine sehr begrenzte Möglichkeit gegeben, das Ergebnis der Untersuchung einer Untereinheit des gerade ablaufenden Verfahrenszyklus′ zur Beeinflussung der Ergebnisse zukünftiger Verfahrenszyklen zu verwenden. Auch kann bei der Untersuchung im gegenwärtigen Verfahrenszyklus nicht beliebig auf das Ergebnis der Untersuchung der vorhergehenden Untereinheit zurückgegriffen werden.

Der Erfindung liegt die Aufgabe zugrunde, ein Verfahren zur Untersuchung eines digitalen Datenstromes zu schaffen, bei dem die Untersuchung des digitalen Datenstromes bzw. der Untereinheiten einen hohen anwenderspezifischen Freiraum im Hinblick auf die Untersuchungskriterien und die Verknüpfung der Untersuchungsergebnisse der jeweiligen Untereinheiten ermöglicht.

Diese Aufgabe wird gemäß der Erfindung gelöst durch ein Verfahren zur Untersuchung und Beurteilung eines digitalen Datenstromes hinsichtlich der Erfüllung oder Nichterfüllung charakteristischer Merkmale, bei dem der Datenstrom in jeweils aus einer Anzahl digitaler Daten (Bits) bestehende Untereinheiten unterteilt wird, bei dem die Untersuchung und Beurteilung aufeinanderfolgender Untereinheiten jeweils innerhalb aufeinanderfolgender Verfahrenszyklen erfolgt, wobei jeder Verfahrenszyklus mehrere Teilschritte enthält und wobei mit jedem Verfahrenszyklus eine Ausgangsinformation gebildet wird, indem
a) in einem Teilschritt eines Verfahrenszyklus′ ein Vergleich einer Untereinheit mit einem zugeordneten Referenzwert hinsichtlich vorgebbarer Kriterien vorgenommen wird und das Vergleichsergebnis bereitgestellt wird,
b) in einem weiteren Teilschritt des einen Verfahrenszyklus′ entweder durch Anwenderbefehle einerseits die Ausgangsinformation des vorhergehenden Verfahrenszyklus′ als Ausgangsinformation übernommen und andererseits eine vorläufige Halteentscheidung getroffen wird, wodurch diese Ausgangsinformation als Ausgangsinformation für folgende Verfahrenszyklen erhalten wird, oder - sofern keine Halteentscheidung aus einem der vorhergehenden Verfahrenszyklen Bestand hat - das Vergleichsergebnis hinsichtlich einer durch Anwenderbefehle auswählbaren Fragestellung abgefragt und das Ergebnis dieser Abfrage als Ausgangsinformation des einen Verfahrenszyklus bereitgestellt wird,
c) in einem zusätzlichen Teilschritt in Abhängigkeit von der Ausgangsinformation des einen Verfahrenszyklus′, der Fragestellung gemäß dem weiteren Teilschritt, dem Vergleichsergebnis und einem weiteren Anwenderbefehl bestimmt wird, ob die vorläufige Halteentscheidung getroffen wird, wodurch die Ausgangsinformation des einen Verfahrenszyklus′ als Ausgangsinformation für folgende Verfahrenszyklen erhalten wird,
d) in einem ergänzenden Teilschritt durch zusätzliche Anwenderbefehle in Abhängigkeit von der Ausgangsinformation des einen Verfahrenszyklus′ entweder bestimmt wird, daß die Ausgangsinformation für alle folgenden Verfahrenszyklen endgültig Bestand haben soll (endgültige Halteentscheidung), oder bestimmt wird, ob eine zuvor getroffene vorläufige Halteentscheidung für den folgenden Verfahrenszyklus aufgehoben wird oder nicht.

Unter der Untersuchung einer Untereinheit wird die Beurteilung ihres Wertes, beispielsweise im Hinblick auf einen Referenzwert, verstanden. Der Wert einer Untereinheit ist durch die Werte und die Wertigkeiten (Stellenwerte) der sie bildenden digitalen Daten (Bits) definiert. Dabei können in an sich bekannter Weise bestimmte Bits durch vorherige Maskierung in sogenannte "don't care-bits" überführt werden, die für die Beurteilung des Wertes der Untereinheit dann unmaßgeblich sind.

Unter charakteristischen Merkmalen eines digitalen Datenstroms wird beispielsweise verstanden, daß ein aus einer Anzahl von Untereinheiten gebildeter Abschnitt des Datenstroms mit einer entsprechenden Anzahl von Referenzwerten übereinstimmt.

Das erfindungsgemäße Verfahren bietet dem Anwender den Vorteil, die Bildung der Ausgangsinformationen seinen Bedürfnissen entsprechend manipulieren zu können. Dazu bestehen folgende Möglichkeiten:
Der Anwender kann gemäß dem weiteren Teilschritt des einen Verfahrenszyklus′ durch Anwenderbefehle festlegen, hinsichtlich welcher Fragestellung das Vergleichsergebnis abgefragt werden soll. Diese Festlegung ist jedoch nur wirksam, solange keine endgültige oder vorläufige Halteentscheidung getroffen worden ist. Der Anwender kann gemäß dem weiteren Teilschritt des einen Verfahrenszyklus′ durch Anwenderbefehle andernfalls festlegen, daß die Ausgangsinformation des vorhergehenden Verfahrenszyklus′ als Ausgangsinformation des gerade ablaufenden Verfahrenszyklus′ beibehalten bzw. übernommen wird. Eine derartige Übernahme der Ausgangsinformation des vorhergehenden Verfahrenszyklus′ führt automatisch zu einer vorläufigen Halteentscheidung mit der Wirkung, daß diese Ausgangsinformation als Ausgangsinformation auch der jeweils folgenden Verfahrenszyklen erhalten wird, d. h. beibehalten oder übernommen wird. Das bedeutet, daß das Vergleichsergebnis und die Fragestellung gemäß dem weiteren Teilschritt auf die Bildung der Ausgangsinformationen folgender Verfahrenszyklen keinen Einfluß haben.

Gemäß dem zusätzlichen Teilschritt wird in Abhängigkeit von der Ausgangsinformation des einen Verfahrenszyklus′, der Fragestellung gemäß dem weiteren Teilschritt, dem Vergleichsergebnis und einem weiteren Anwenderbefehl festgelegt, ob eine vorläufige Halteentscheidung getroffen wird. Damit kann der Anwender in vorteilhafter Weise bestimmen, daß eine vorläufige Halteentscheidung getroffen wird, auch wenn die Ausgangsinformation des einen Verfahrenszyklus′ nicht durch Übernahme der Ausgangsinformation des vorhergehenden Verfahrenszyklus′ gebildet worden ist. So kann beispielsweise eine vorläufige Halteentscheidung getroffen werden, wenn bei einer bestimmten Fragestellung eine bestimmte Ausgangsinformation gebildet wird.
In dem ergänzenden Teilschritt hat der Anwender die Möglichkeit, die vorläufige Halteentscheidung bzw. die Ausgangsinformation des einen Verfahrenszyklus′ für folgende Verfahrenszyklen zu gewichten. Der Anwender kann dazu durch Anwenderbefehle in Abhängigkeit von der Ausgangsinformation des gerade ablaufenden Verfahrenszyklus′ bestimmen, daß die vorläufige Halteentscheidung für den folgenden Verfahrenszyklus aufgehoben wird. Diese Bestimmung ist selbstverständlich nur dann wirksam, wenn in dem gerade ablaufenden Verfahrenszyklus oder einem der vorhergehenden Verfahrenszyklen eine vorläufige Halteentscheidung getroffen worden ist. Es besteht ferner in dem ergänzenden Teilschritt die Möglichkeit, durch Anwenderbefehle in Abhängigkeit von der Ausgangsinformation des gerade ablaufenden Verfahrenszyklus die vorläufige Halteentscheidung weiterhin bestehen zu lassen, so daß zumindest für den darauf folgenden Verfahrenszyklus die Ausgangsinformation von dem gerade ablaufenden Verfahrenszyklus übernommen bzw. beibehalten wird. Alternativ zu diesen Möglichkeiten besteht in dem ergänzenden Teilschritt die Möglichkeit, durch Anwenderbefehle in Abhängigkeit von der Ausgangsinformation des gerade ablaufenden Verfahrenszyklus′ zu bestimmen, daß die Ausgangsinformation des gerade ablaufenden Verfahrenszyklus′ für alle folgenden Verfahrenszyklen endgültig Bestand haben soll. Damit wird eine endgültige Halteentscheidung getroffen, die in keinem der folgenden Verfahrenszyklen aufgehoben werden kann. Dies kann in der Praxis beispelsweise dann besonders vorteilhaft sein, wenn in einem Datenstrom eine ganz bestimmte untereinheit oder Folge von Untereinheiten gefunden werden soll, und nach Auffinden dieser bestimmten Untereinheit bzw. Folge von Untereinheiten die Ergebnisse der Untersuchung weiterer Untereinheiten nicht beachtlich sind.
Nur wenn weder eine endgültige noch eine vorläufige Halteentscheidung getroffen ist oder eine gegebenenfalls zuvor getroffene vorläufige Halteentscheidung durch Anwenderbefehle nach dem ergänzenden Teilschritt in dem gerade ablaufenden Verfahrenszyklus aufgehoben ist, kann die Ausgangsinformation im folgenden Verfahrenszyklus gemäß dem weiteren Teilschritt hinsichtlich einer durch Anwenderbefehle auswählbare Fragestellung aus dem Vergleichszklus des folgenden Verfahrens zyklus gebildet werden oder (erneut) eine vorläufige Halteentscheidung getroffen werden. Vor Beginn der Untersuchung eines digitalen Datenstroms wird vor dem Durchlauf des ersten Verfahrenszyklus′ nach dem erfindungsgemäßen Verfahren eine Initialisierung durchgeführt, mit der beispielsweise eine Ausgangsinformation willkürlich vorgegeben wird, auf die während des ersten Verfahrenszyklus′ zurückgegriffen werden kann.

Eine vorteilhafte Fortbildung des erfindungsgemäßen Verfahrens sieht vor, daß die durch die Anwenderbefehle auswählbare Fragestellung aus den Fragestellungen, ob die jeweilige Untereinheit "gleich", "ungleich", "größer" oder "kleiner" als der jeweilige Referenzwert ist, ausgewählt wird. Damit lassen sich in vorteilhafter Weise neben der Feststellung der Übereinstimmung bzw. Nichtübereinstimmung einer untereinheit mit einem jeweiligen Referenzwert Aussagen darüber machen, ob der Wert der Untereinheit größer oder kleiner als der jeweilige Referenzwert ist. Bei einer Folge von Untereinheiten kann in vorteilhafter Weise beurteilt werden, ob der durch die einzelnen Werte der Untereinheiten in Abhängigkeit der Wertigkeit ihrer Reihenfolge gebildete Wert der Folge größer oder kleiner als der Wert der Folge der jeweiligen Referenzwerte ist. Bei einer derartigen Anwendung des erfindungsgemäßen Verfahrens wird die Ausgangsinformation des vorhergehenden Verfahrenszyklus′ (beim ersten Verfahrensdurchlauf die initialisierte Ausgangsinformation) als Ausgangsinformation des gerade ablaufenden Verfahrenszyklus′ beibehalten, sofern das Vergleichsergebnis eine Gleichheit von Untereinheit und Referenzwert darstellt und als auswählbare Fragestellung "Untereinheit größer als Referenzwert" oder "Untereinheit kleiner als Referenzwert" gewählt worden ist.

Eine vorteilhafte Fortbildung des erfindungsgemäßen Verfahrens sieht vor, daß in einem der Teilschritte ein Anwenderbefehl als Freigabesignal für die Ausgangsinformation wirksam wird, indem eine Bool'sche Verknüpfung mit der Ausgangsinformation erfolgt. Hierdurch kann in vorteilhafter Weise eine Freigabe der Ausgangsinformation gesteuert werden.

Eine weitere Fortbildung des Verfahrens sieht vor, daß die Summe der zeitlichen Dauer der Teilschritte die Dauer eines Systemtaktes nicht überschreitet. Damit kann in vorteilhafter Weise jede Untereinheit eines digitalen Datenstromes in Echtzeit untersucht werden.

Für eine besonders einfache Steuerung des Verfahrens ist vorgesehen, daß für die Dauer der Teilschritte jeweils gleiche Bruchteile der Dauer des Verfahrenszyklus′ vorgesehen werden.

Die zur Untersuchung einer Untereinheit zur Verfügung stehende Verarbeitungszeit ist bei einer Untersuchung in Echtzeit durch die Systemtaktdauer begrenzt; hat die Systemtaktdauer einen beispielsweise durchaus üblichen Wert von 800 ns, so muß die Untersuchung einer Untereinheit innerhalb dieser 800 ns abgeschlossen sein. Soll dieselbe Untereinheit mit dem erfindungsgemäßen Verfahren im Hinblick auf unterschiedliche Abfragekriterien untersucht werden, so kann das erfindungsgemäße Verfahren in vorteilhafter Weise mehrfach, um jeweils die Dauer eines Teilschrittes zeitlich versetzt, mit derselben Untereinheit durchgeführt werden. Sind beispielsweise vier Teilschritte vorgesehen und entfällt auf jeden Teilschritt eine Dauer von 200 ns, so ist eine viermalige, unterschiedliche Untersuchung derselben Untereinheit in Echtzeit möglich.

Eine vorteilhafte Ausbildung der Erfindung sieht vor, daß das Vergleichsergebnis und die Anwenderbefehle in dem einen Teilschritt des einen Verfahrenszyklus′ in Zwischenspeichern zwischengespeichert werden. Eine derartige Zwischenspeicherung erfolgt frühestens in dem Moment, in dem das Vergleichsergebnis gebildet worden ist. Auf diese Weise wird der Datenbus der die Anwenderbefehle bereitstellenden Speichereinheiten entlastet, weil die Anwenderbefehle nicht für den gesamten Verfahrenszyklus über den Datenbus bereitgestellt werden müssen, sondern nur so lange, bis die Übernahme in die Zwischenspeicher erfolgt ist. Damit bietet sich die vorteilhafte Möglichkeit, mehrere zeitlich versetzt ablaufende erfindungsgemäße Verfahren durch dieselben Speichereinheiten mit verfahrensnotwendigen Daten, z. B. mit den Anwenderbefehlen, zu versorgen.

Was die Reihenfolge der Teilschritte des erfindungsgemäßen Verfahrens angeht, so sind grundsätzlich bei entsprechender Initialisierung andere Reihenfolgen denkbar. So kann beispielsweise der ergänzende Teilschritt nach dem einen und unmittelbar vor dem weiteren Teilschritt ausgeführt werden. Die Abhängigkeit der Aktion des ergänzenden Teilschritts des gerade ablaufenden Verfahrenszyklus′ von der Ausgangsinformation bezieht sich dann auf die im vorangegangenen Verfahrenszyklus′ gebildete Ausgangsinformation. Auch die Zuordnung der einzelnen Aktionen der Teilschritte ist veränderbar, so daß beispielsweise in dem weiteren Teilschritt nur die Übernahme der Ausgangsinformation des vorhergehenden Verfahrenszyklus′ als Ausgangsinformation des gerade ablaufenden Verfahrenszyklus′ erfolgt und die Realisierung der vorläufigen Halteentscheidung′ wodurch diese Ausgangsinformation als Ausgangsinformation für folgende Verfahrenszyklen erhalten wird, in dem zusätzlichen Teilschritt erfolgt.

Die Erfindung wird in der Zeichnung im folgenden näher erläutert. Es zeigen
Figur 1 einen möglichen Ablauf des erfindungsgemäßen Verfahrens,
Figur 2 mögliche Fragestellungen und deren Codierung zur Abfrage eines Vergleichsergebnisses,
Figur 3 mögliche Kombinationen von Anwenderbefehlen X4, X5 und X6 und deren Bedeutungen,
Figur 4 einen weiteren möglichen Ablauf des erfindungsgemäßen Verfahrens,
Figur 5 eine schematische Darstellung einer Schaltungsanordnung zur Durchführung des erfindungsgemäßen Verfahrens,
Figur 6 einen Ausschnitt aus der Figur 5 mit Details einer Schaltungsanordnung zur Durchführung des erfindungsgemäßen Verfahrens.

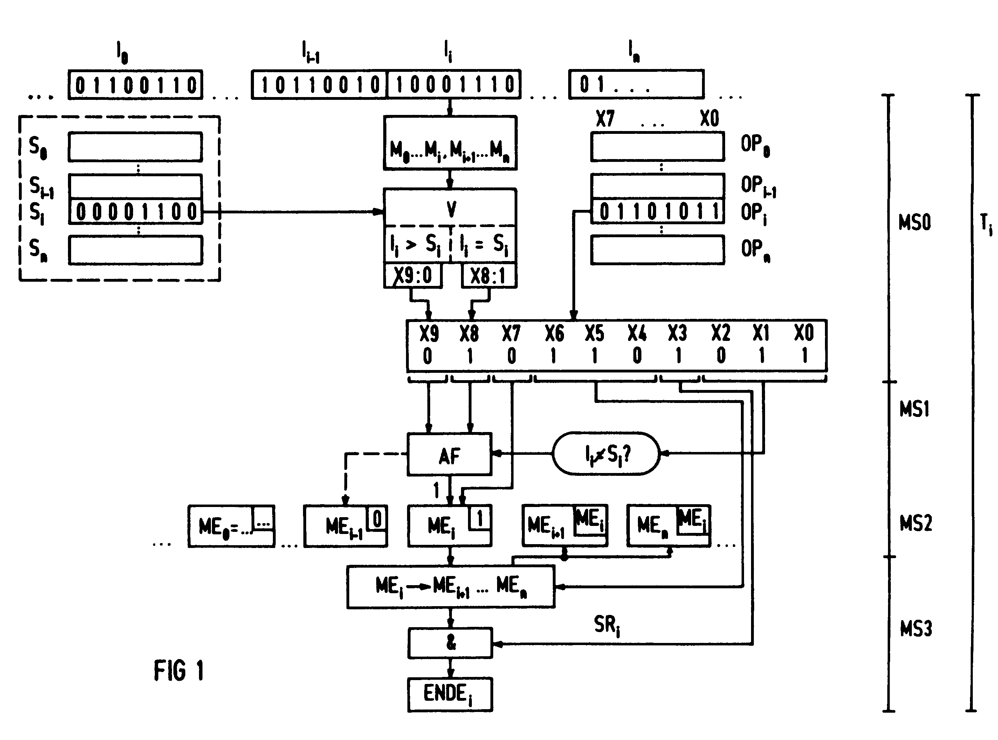

Figur 1 zeigt einen aus aufeinanderfolgenden Bits bestehenden digitalen Datenstrom, der in Untereinheiten Iₒ bis Iₙ unterteilt wird, wobei explizit Untereinheiten Iₒ, Iᵢ₋₁, Iᵢ und Iₙ dargestellt sind. Jede Untereinheit ist aus einem Byte (8 Bits) gebildet. In einem Verfahrenszyklus Tᵢ wird die Untereinheit Iᵢ untersucht. Die Untereinheit Iᵢ, die eine Bitfolge 10001110 aufweist, wird zunächst durch logische UND-Verknüpfung mit einem dem Verfahrenszyklus Tᵢ zugeordneten Masken-Byte Mᵢ maskiert und dann einem Vergleich V unterzogen. Als Referenzgröße für den Vergleich V dient ein der Untereinheit Iᵢ bzw. dem Verfahrenszyklus Tᵢ zugeordneter Referenzwert Sᵢ, der eine Bitfolge 00001100 aufweist. Der Referenzwert Sᵢ ist derselben Maskierung unterzogen worden. Weitere den Verfahrenszyklen Tₒ...Tₙ zugeordnete Referenzwerte Sₒ...Sₙ sind definiert und werden jeweils zum Vergleich V mit der jeweiligen Untereinheit Iₒ...Iₙ bereitgestellt. Als Vergleichsergebnis wird eine digital codierte Information in Bits X8 und X9 bereitgestellt. Bit X9 hat den Wert 0, wenn der Vergleich ergeben hat, daß der Wert der (gegebenenfalls maskierten) Untereinheit Iᵢ größer als der (gegebenenfalls maskierte) Referenzwert Sᵢ ist (Iᵢ > Sᵢ); Bit X8 hat den Wert 0, wenn die Untereinheit Iᵢ denselben Wert wie der Referenzwert Sᵢ aufweist (Iᵢ = Sᵢ). Nehmen beide Bits X9 und X8 den Wert 0 an, deutet dieser unlogische Zustand auf einen Fehler hin. Zusammen mit den Bits X8 und X9 aus dem Vergleich V werden acht einen Operator OPᵢ bildende Bits als Anwenderbefehle X7 bis X0 bereitgestellt. Weitere Operatoren OPₒ bis OPₙ sind definiert und dem jeweiligen Verfahrenszyklus Tₒ bis Tₙ zugeordnet. Die Durchführung des Vergleichs V und die Bereitstellung des in den Bits X9 und X8 codierten Vergleichsergebnisses sowie der Anwenderbefehle X7 bis X0 in Form des zugeordneten Operators OPᵢ bilden einen ersten Teilschritt MS0 innerhalb des Verfahrenszyklus′ Tᵢ.

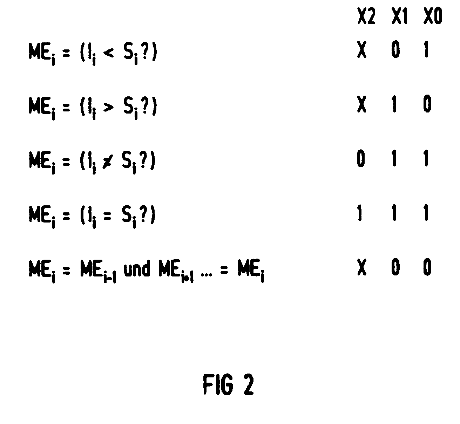

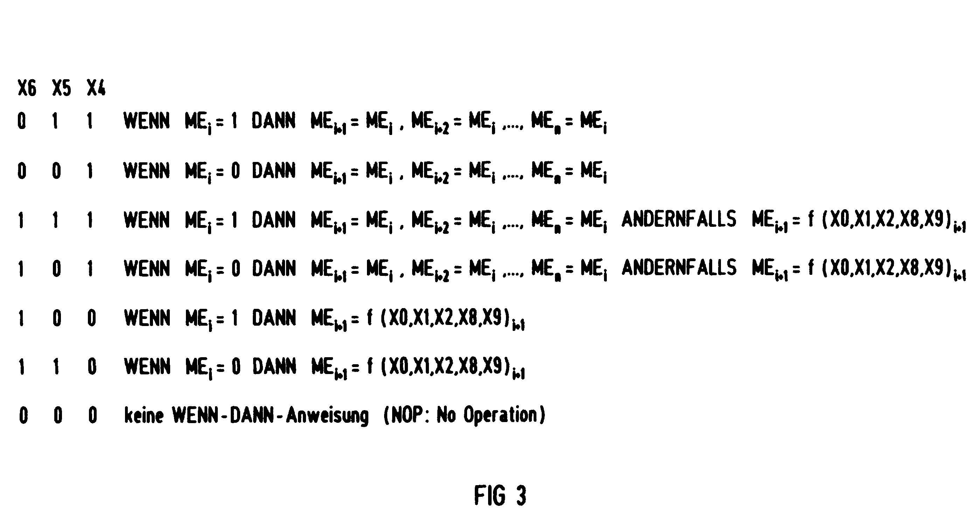

In einem weiteren Teilschritt MS1 des Verfahrenszyklus′ Tᵢ wird das codierte Vergleichsergebnis hinsichtlich einer auswählbaren Fragestellung einer Abfrage AF unterzogen. In der Figur 2 sind Fragestellungen und ihre Codierung durch die Anwenderbefehle X0 bis X2 dargestellt, wobei selbstverständlich auch eine andere Wahl bzw. Zuordnung der Codierungen möglich ist. Das Symbol "X" bedeutet, der Wert des Anwenderbefehls ist unbeachtlich (don't care). Die Fragestellung kann lauten: Untereinheit "kleiner", "größer", "ungleich" oder "gleich" Referenzwert Sᵢ? In der fünften Zeile der Figur 2 erkennt man eine weitere, durch die Kombination der Anwenderbefehle X0 = 0 und X1 = 0 vorgebbare Anweisung der symbolischen Form: MEᵢ = MEᵢ₋₁ und MEᵢ₊₁... = MEᵢ. Bei dieser Anweisung wird die Ausgangsinformation des vorhergehenden Verfahrenszyklus′ MEᵢ₋₁ als Ausgangsinformation MEᵢ übernommen bzw. beibehalten; darüber hinaus wird damit eine vorläufige Halteentscheidung getroffen, die bewirkt, daß auch die folgenden Ausgangsinformationen MEᵢ₊₁... folgender Verfahrenszyklen Tᵢ₊₁... die Ausgangsinformation MEᵢ des Verfahrenszyklus′ Tᵢ erhalten. Diese vorläufige Halteentscheidung kann während jedes Verfahrenszyklus′ aufgehoben werden (vgl. Figur 3). Im Beispiel nach der Figur 1 lautet die Fragestellung für die Abfrage AF "Untereinheit ungleich Referenzwert (Iᵢ ≠ Sᵢ?)", codiert in den Anwenderbefehlen X0 = 1, X1 = 1 und X2 = 0. Die Fragestellung wird also durch entsprechende Vorgabe der Operatoren OPₒ bis OPₙ für jeden Verfahrenszyklus Tₒ bis Tₙ bzw. jede Untereinheit Iₒ bis Iₙ unabhängig festgelegt. Im Beispiel nach Fig. 1 ergibt der Vergleich V, daß Untereinheit Iᵢ und Referenzwert Sᵢ ungleich sind, die Fragestellung (Iᵢ ≠ Sᵢ?) führt also zu einem positiven Ergebnis der Abfrage, das durch eine 1 als Ausgangsinformation MEᵢ symbolisiert ist. Die Ausgangsinformation MEᵢ = 1 ist der Untereinheit Iᵢ bzw. dem Verfahrenszyklus Tᵢ fest zugeordnet.

In einem zusätzlichen Teil schritt MS2 wird in Abhängigkeit des Vergleichsergebnisses X8 und einem weiteren Anwenderbefehl X7 festgelegt, ob eine vorläufige Halteentscheidung getroffen wird. Eine vorläufige Halteentscheidung soll in dem zusätzlichen Teilschritt MS2 dann getroffen werden, wenn sowohl der Anwenderbefehl X7 als auch das Vergleichsergebnis X8 den Wert 1 aufweisen. Dabei repräsentiert der Anwenderbefehl X7 die Wertigkeit einer Folge von Untereinheiten. Ein Anwenderbefehl X7 = 1 bedeutet, daß die Folge der zu untersuchenden Untereinheiten als MSBF-geordnet anzusehen ist; dieser Anwenderbefehl ist insbesondere dann von Vorteil, wenn die Folge der Untereinheiten im Hinblick darauf untersucht werden soll, ob ihr Wert größer oder kleiner als der Wert einer Folge von Referenzwerten ist. Bei einer MSBF-geordneten Folge von Untereinheiten ist nämlich die Fragestellung größer bzw. kleiner mit der ersten Untereinheit beantwortbar, die nicht mit dem ihr zugeordneten Referenzwert übereinstimmt. In diesem Fall erhält Bit X8 den Wert 1, so daß damit eine vorläufige Halteentscheidung getroffen wird. Auf gleiche Weise kann eine vorläufige Halteentscheidung getroffen werden, wenn die auswählbare Fragestellung die Gleichheit der Werte einer Folge von Untereinheiten mit der entsprechenden Folge von Referenzwerten abfragt und eine erste von dem ihr zugeordneten Referenzwert verschiedene Untereinheit auftritt. Gemäß Figur 1 hat der Anwenderbefehl X7 den Wert 0, so daß im zusätzlichen Teilschritt keine vorläufige Halteentscheidung getroffen wird.

In einem ergänzenden Teilschritt MS3 wird in Abhängigkeit von der Ausgangsinformation MEᵢ durch die Anwenderbefehle X4, X5 und X6 festgelegt, ob diese Ausgangsinformation MEᵢ als Ausgangsinformation MEᵢ₊₁... MEₙ aller folgenden Verfahrenszyklen Tᵢ₊₁...Tₙ - unabhängig von dem Ergebnis des Vergleichs V bzw. der Abfrage AF des Ergebnisses nach der auswählbaren Fragestellung der folgenden Verfahrenszyklen Tᵢ₊₁... Tₙ - übernommen wird. Die Abhängigkeit der durch die Anwenderbefehle X4 bis X6 auslösbaren Aktion und ihre Wirkung ist in Form von "WENN ... DANN"-Befehlen in der Figur 3 dargestellt. Auch hier sind andere Codierungen möglich. Nach Zeile 1 der Figur 3 bedeutet die Kombination X4 = 1, X5 = 1 und X6 = 0: Wenn die Ausgangsinformation MEᵢ des Verfahrenszyklus′ Tᵢ den Wert 1 hat, dann erhalten auch alle folgenden Ausgangsinformationen MEᵢ₊₁ bis MEₙ der folgenden Verfahrenszyklen Tᵢ₊₁ bis Tₙ den Wert der Ausgangsinformation MEᵢ, d. h. in diesem Fall den Wert 1. Wird auf diese Weise die Ausgangsinformation für alle folgenden Verfahrenszyklen Tᵢ...Tₙ festgelegt, ist eine endgültige Halteentscheidung getroffen. Im Gegensatz zu einer vorläufigen Halteentscheidung ist eine durch eine der Kombinationen der Anwenderbefehle X4 bis X6 nach den Zeilen 1 bis 4 der Figur 3 getroffene endgültige Halteentscheidung nicht mehr aufzuheben, es sei denn, durch einen Neustart des Verfahrens. Wie aus der dritten Zeile der Fig. 3 hervorgeht, ist eine Erweiterung (ANDERNFALLS) dieser Anweisung dahingehend möglich, daß für den Fall, daß die Ausgangsinformation MEᵢ den Wert 0 angenommen hat, eine gegebenenfalls in dem Verfahrenszyklus Tᵢ oder in einem vorhergehenden Verfahrenszyklus Tᵢ₋₁...Tₒ getroffene vorläufige Halteentscheidung aufgehoben wird. Die in den Zeilen 5 bzw. 6 der Fig. 3 dargestellte Anweisung bewirkt bei Vorliegen der entsprechenden Ausgangsinformation MEᵢ ebenfalls, daß die vorläufige Halteentscheidung aufgehoben wird. Mit dem Aufheben der vorläufigen Halteentscheidung werden die folgenden Ausgangsinformationen MEᵢ₊₁... wieder wie beschrieben aus dem Vergleich V (codiert in den Bits X8, X9) und nach Maßgabe der Anwenderbefehle X0, X1 und X2 gebildet (symbolisiert durch den Ausdruck MEᵢ₊₁ = f (X1, X2, X3, X8, X9)ᵢ₊₁ in der Figur 3), solange bis (erneut) eine vorläufige Halteentscheidung oder eine endgültige Halteentscheidung getroffen wird. Lauten die Anwenderbefehle X4 = 0, X5 = 0 und X6 = 0, wird keine Anweisung ausgeführt (no operation). Die Aufhebung einer vorläufigen Halteentscheidung ist selbstverständlich wirkungslos, wenn zuvor keine vorläufige Halteentscheidung getroffen wurde.

In dem ergänzenden Teilschritt MS3 erfolgt eine logische UND-Verknüpfung der Ausgangsinformation MEᵢ mit einem Freigabesignal SRᵢ, das durch den Anwenderbefehl X3 gegeben ist.

Mit der Beendigung des Teilschrittes MS3 ist ein Verfahrenszyklus Tᵢ abgeschlossen, und der folgende Verfahrenszyklus Tᵢ₋₁ kann in analoger Weise mit der folgenden Untereinheit Iᵢ₊₁ durchgeführt werden. Die Dauer eines Verfahrenszyklus′ Tᵢ ist durch Verteilung der einzelnen Aktionen auf die Teilschritte MS0 bis MS3 dabei so bemessen, daß der gesamte Verfahrenszyklus während der Dauer eines Systemtaktes ausgeführt werden kann, so daß eine Untersuchung des digitalen Datenstroms in Echtzeit möglich ist.

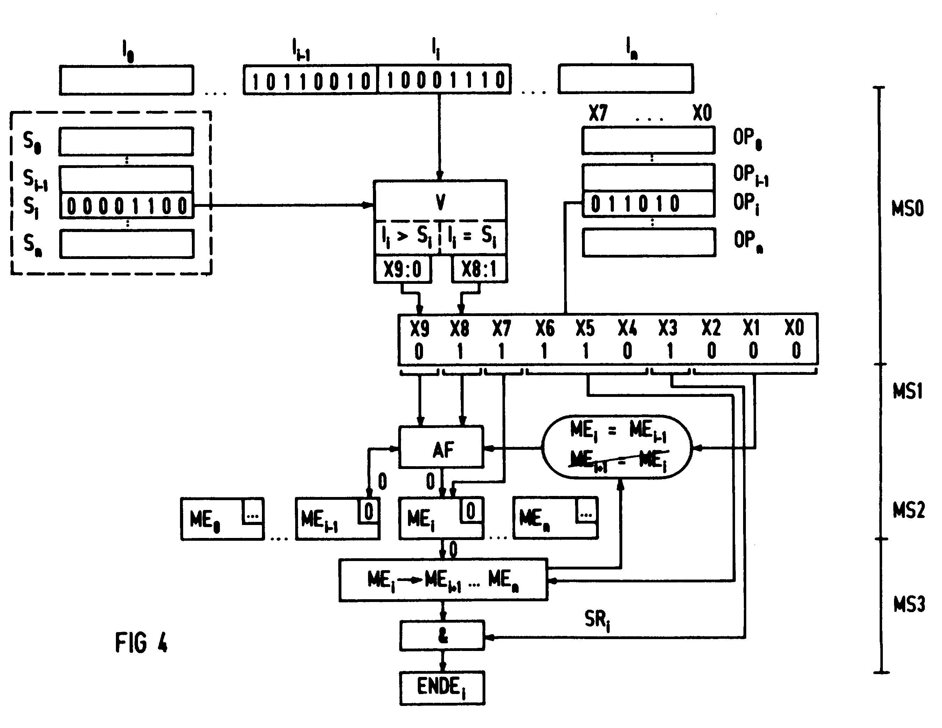

In der Figur 4 ist ein weiterer möglicher Verfahrensablauf dargestellt; die Anwenderbefehle X0, X1 und X2 für die auswählbare Fragestellung sind so gewählt (X0 = 0; X1 = 0), daß die Ausgangsinformation MEᵢ₋₁ des vorhergehenden Verfahrenszyklus Tᵢ₋₁ als Ausgangsinformation MEᵢ des Verfahrenszyklus′ Tᵢ übernommen wird. Es sei angenommen, daß die Ausgangsinformation des vorhergehenden Verfahrensyklus′ Tᵢ₋₁ MEᵢ₋₁ = 0 sei; somit wird die Ausgangsinformation MEᵢ = 0, unabhängig von dem in den Bits X8 und X9 codierten Vergleichsergebnis der Untereinheit Iᵢ mit dem Referenzwert Sᵢ. Gleichzeitig wird damit eine vorläufige Halteentscheidung getroffen (vgl. Zeile 5 der Fig. 2). Die im zusätzlichen Teilschritt MS2 durch das Vergleichsergebnis X8 = 1 und dem Anwenderbefehl X7 = 1 zu treffende vorläufige Halteentscheidung ist in diesem Fall daher wirkungslos. Im ergänzenden Verfahrensschritt MS3 kann wiederum bestimmt werden, ob die Ausgangsinformation MEᵢ für alle weiteren Verfahrenszyklen übernommen werden soll oder nicht (vgl. Fig. 3). Wird in diesem Teilschritt MS3 keine Operation ausgeführt (z.B. X4 = 0, X5 = 0, X6 = 0), ist vorbestimmt, daß während des folgenden Verfahrenszyklus′ Tᵢ₊₁ in dem Teilschritt MS1 ohne Berücksichtigung des Ergebnisses der Abfrage des Vergleichs V der folgenden Untereinheit Iᵢ₊₁ mit dem zugeordneten Referenzwert Sᵢ₊₁ wiederum das Ausgangssignal MEᵢ des Verfahrenszyklus′ Tᵢ auch für diesen Verfahrenszyklus Tᵢ₊₁ als Ausgangssignal MEᵢ₊₁ übernommen wird, d. h. MEᵢ₊₁ = 0. Dieses Vorgehen wird nämlich so lange beibehalten, bis durch entsprechende Anwenderbefehle X4, X5 und X6, wie zuvor beschrieben, die Ausgangsinformation wieder in Abhängigkeit des Vergleichs V und der Abfrage AF gebildet werden kann. Im Beispiel nach der Figur 4 lautet die Kombination X4 = 0, X5 = 1, X6 = 1 und die Ausgangsinformation MEᵢ = 0; somit wird die Ausgangsinformation MEᵢ₊₁ des folgenden Verfahrenszyklus Tᵢ₊₁ aus dem Vergleich V bzw. nach Maßgabe der Anwenderbefehle X0 bis X2 gebildet, da die vorläufige Halteentscheidung durch diese Kombination von X4 bis X6 aufgehoben wird; dies ist in der Figur 4 durch das Durchstreichen des Ausdrucks MEᵢ₊₁ = MEᵢ symbolisiert. Mit diesem Verfahren läßt sich nach den anwenderspezifischen Bedürfnissen eine Untersuchung eines digitalen Datenstromes, der in Untereinheiten, z. B. in Bytes, zerlegt wird, durchführen, wobei in beliebiger Weise auf das Untersuchungsergebnis einer vorhergehenden Untereinheit zurückgegriffen werden kann und das Untersuchungsergebnis der untersuchten Untereinheit auch für die Untersuchung einer bestimmten Anzahl (vorläufige Halteentscheidung) oder aller weiteren (endgültige Halteentscheidung) untersuchten Untereinheiten Gültigkeit erhalten kann.

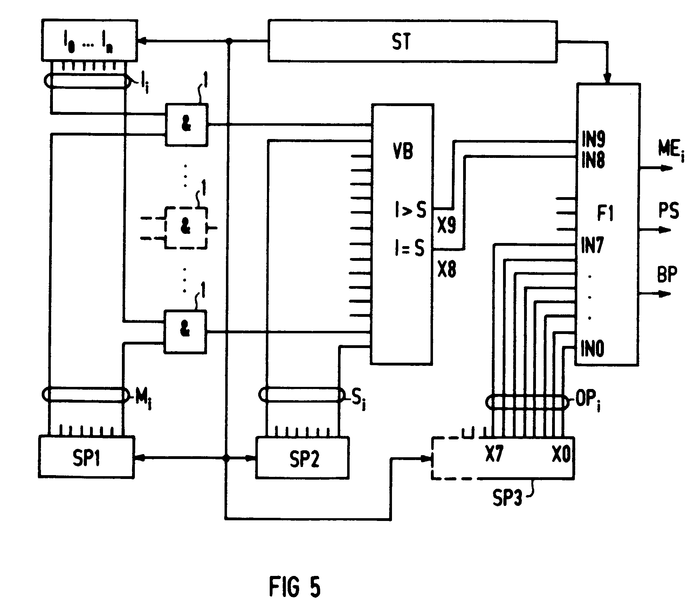

In der Figur 5 ist eine Schaltungsanordnung zur Durchführung des erfindungsgemäßen Verfahrens schematisch dargestellt. Zur Erläuterung sei wieder vorausgesetzt, daß der zu untersuchende digitale Datenstrom byteweise in Untereinheiten zerlegt wird. Eine zu untersuchende Untereinheit Iᵢ wird UND-Gliedern 1 zugeführt und dort mit einer ebenfalls aus einem Byte bestehenden Maske Mᵢ logisch verknüpft. Der Index "i" weist auch hier auf Größen desselben Verfahrenszyklus′ Tᵢ hin. Die Maske Mᵢ wird aus einem Speicherbaustein SPI abgerufen. Die maskierte Untereinheit Iᵢ wird einem Vergleicherbaustein VB zugeführt, in dem sie mit einem Referenzwert Sᵢ verglichen wird, der aus einem weiteren Speicherbaustein SP2 abgerufen wird. Dieser Referenzwert Sᵢ ist bereits entsprechend der Maske Mᵢ maskiert. In dem Vergleicherbaustein VB findet ein Vergleich statt, wobei das Vergleichsergebnis in Bits X8 und X9 codiert zur Verfügung steht. Ein schematisch dargestellter Filterbaustein F1 wird an seinen Eingängen IN8 und IN9 mit dem in den Bits X8 und X9 codierten Vergleichsergebnis und mit an seinen Eingängen IN0 bis IN7 einem entsprechend zugeordneten Operator OPᵢ beaufschlagt, der ebenfalls aus einem Byte gebildet ist, das aus einem weiteren Speicherbaustein SP3 abgerufen wird. Der Operator OPᵢ enthält Anwenderbefehle X0 bis X7. Ausgangsseitig stellt der Filterbaustein F1 für den Verfahrenszyklus Tᵢ eine Ausgangsinformation MEᵢ, ein Prüfausgangssignal PS sowie gegebenenfalls ein Ausgangssignal BP, das z. B. zur Aktivierung und Synchronisierung eines weiteren Filterbausteins dient, zur Verfügung. Die Anordnung wird von einer Systemsteuerung ST überwacht und getaktet.

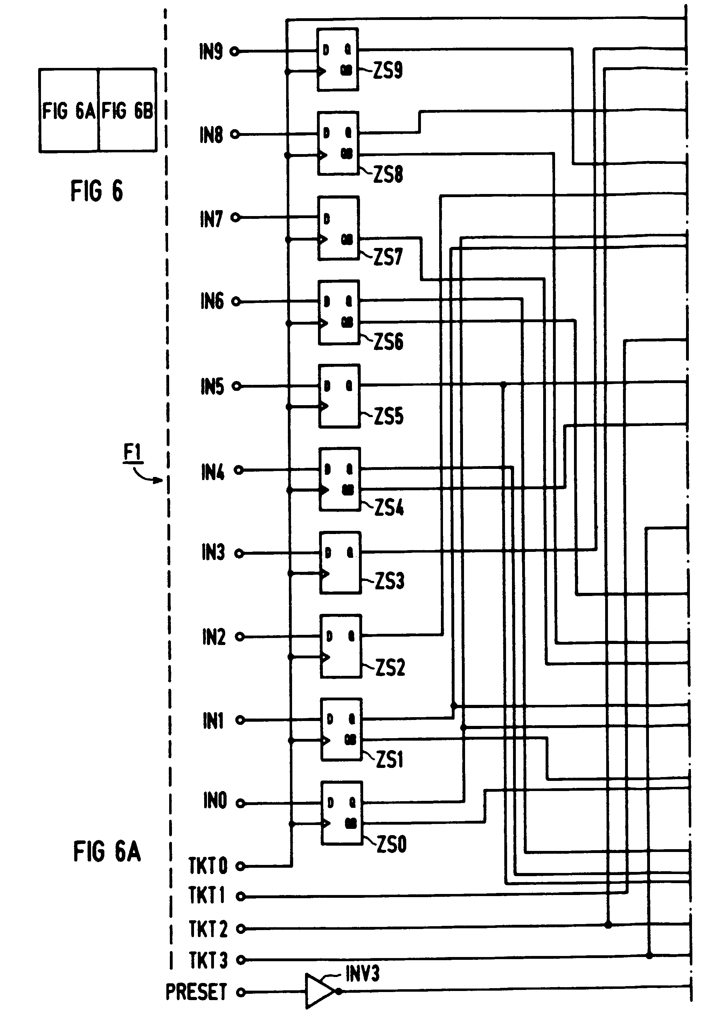

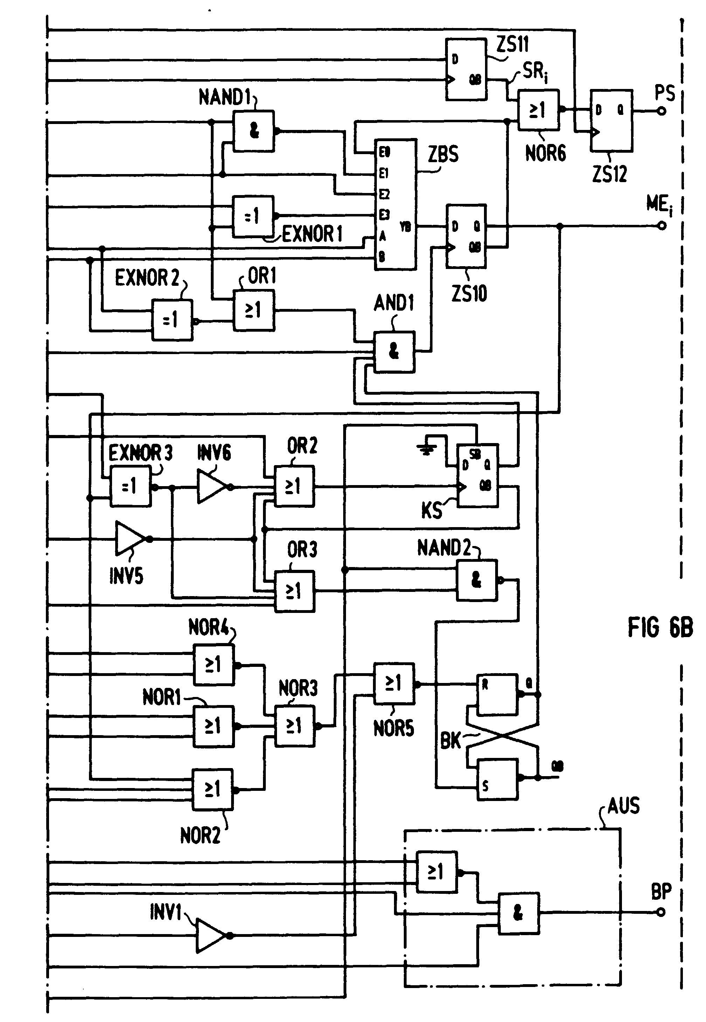

Figur 6 zeigt den detaillierten Aufbau des Filterbausteins F1. Man erkennt die Eingänge IN0 bis IN9, die von Dateneingängen D von Zwischenspeichern ZS0 bis ZS9 gebildet sind, wobei an die Eingänge IN0 bis IN7 die in dem Operator OPᵢ zusammengefaßten Anwenderbefehle X0 bis X7 anliegen und an den Eingängen IN8 und IN9 das in den Bits X8 und X9 codierte Vergleichsergebnis aus dem Vergleicherbaustein VB anliegt. Ferner sind vier Takteingänge TKT0 bis TKT3 sowie ein PRESET-Eingang erkennbar. Für die weitere Erläuterung des Filterbausteins F1 wird angenommen, daß der Takteingang TKT1 mit dem Systemtakt beaufschlagt wird, wobei 800 ns als Systemtaktdauer eines digitalen Netzes angenommen werden. Die Takteingänge TKT1 bis TKT3 werden jeweils in Abständen von 200 ns, ausgehend von dem Systemtakt am Takteingang TKT0 mit einem Taktimpuls beaufschlagt, so daß vier gleich lange Unterintervalle von jeweils 200 ns gebildet werden. Der Ausgang Q des Zwischenspeichers ZS9 ist auf einen Eingang eines NAND-Gatters NAND1 und auf einen Eingang E2 eines Zwischenspeicherbausteins ZBS geführt. Der Ausgang Q des Zwischenspeichers ZS8 ist auf einen weiteren Eingang des NAND-Gatters NAND1 geführt. Ein Eingang E1 des Zwischenspeicherbausteins ZBS wird mit dem Ausgang des NAND-Gatters NAND1 beaufschlagt und ein weiterer Eingang E3 mit dem Ausgang eines EXNOR-Gatters EXNOR1, das eingangsseitig mit dem Ausgang Q des Zwischenspeichers ZS8 beaufschlagt ist. Ein weiterer Eingang E0 des Zwischenspeicherbausteins ZBS ist mit dem invertierenden Ausgang QB eines weiteren Zwischenspeichers ZS10 verbunden. Der invertierende Ausgang YB des Zwischenspeicherbausteins ZBS ist auf den Dateneingang D des Zwischenspeichers ZS10 geführt. Die Ausgänge Q der Zwischenspeicherbausteine ZS0 und ZS1 sind auf Eingänge eines NOR-Gatters NOR1 und auf Adresseingänge A bzw. B des Zwischenspeicherbausteins ZBS geführt, mit denen der jeweils gewünschte Eingang E0 bis E3 auf den invertierenden Ausgang YB gelegt werden kann. Der Ausgang Q des Zwischenspeichers ZS2 ist auf einen weiteren Eingang des EXNOR-Gatters EXNOR1 geführt. Die invertierenden Ausgänge QB der Zwischenspeicher ZS0 und ZS1 sind auf Eingänge eines zweiten NOR-Gattes NOR2 geführt. Beide NOR-Gatter NOR1 und NOR2 sind ausgangsseitig mit Eingängen eines weiteren NOR-Gatters NOR3 verbunden. Ein viertes NOR-Gatter NOR4 ist eingangsseitig mit dem invertierenden Ausgang QB des Zwischenspeichers ZS7 sowie mit dem invertierenden Ausgang QB des Zwischenspeichers ZS8 verbunden. Der Ausgang des NOR-Gatters NOR4 ist mit einem weiteren Eingang des NOR-Gatters NOR3 verbunden. Ein weiterer Eingang des NOR-Gatters NOR2 ist mit dem Ausgang des Zwischenspeicherbausteins ZBS verbunden. Der Ausgang des NOR-Gatters NOR3 ist auf einen Eingang eines NOR-Gatters NOR5 geführt, dessen weiterer Eingang mit dem Takteingang TKT2 über ein Invertierglied INV1 verbunden ist. Der Ausgang des NOR-Gatters NOR5 führt auf den Reset-Eingang R einer bistabilen Kippstufe BK. Der Ausgang Q des Zwischenspeichers ZS3 führt auf den Dateneingang D eines weiteren Zwischenspeichers ZS11, dessen Takteingang mit dem Takteingang TKT2 verbunden ist. Dieser Zwischenspeicher ZS11 beaufschlagt mit seinem invertierenden Ausgang QB den Eingang eines NOR-Gatters NOR6 mit einem Freigabesignal SRᵢ. Das NOR-Gatter NOR6 ist eingangsseitig außerdem mit dem invertierenden Ausgang QB des Zwischenspeichers ZS10 verbunden. Der Ausgang des NDR-Gatters NOR6 führt auf den Dateneingang D eines Zwischenspeichers ZS12, dessen Takteingang mit dem Takteingang TKT0 in Verbindung steht. Am Ausgang Q des Zwischenspeichers ZS12 ist das Prüfausgangssignal PS abgreifbar. Die Ausgänge Q der Zwischenspeicher ZS0 und ZS1 werden ferner von einem weiteren EXNOR-Gatter EXNOR2 abgegriffen, an dessen Ausgang sich ein OR-Gatter OR1 anschließt, dessen weiterer Eingang mit dem Ausgang Q des Zwischenspeichers ZS8 verbunden ist. Der Ausgang des NOR-Gatters NOR7 führt auf einen Eingang eines AND-Gatters AND1 das eingangsseitig ferner mit dem Takteingang TKT1 verbunden ist. Ein weiterer Eingang des AND-Gatters AND1 ist mit dem Ausgang Q der bistabilen Kippstufe BK verbunden, während ein vierter Eingang des AND-Gatters AND1 mit dem Ausgang Q einer Kippstufe KS verbunden ist. Der Dateneingang der Kippstufe KS ist mit Masse verbunden. Der Setzeingang SB der Kippstufe KS steht über ein Invertierglied INV3 mit dem PRESET-Eingang in Verbindung. Der Takteingang der Kippstufe KS ist mit dem Ausgang eines OR-Gatters OR2 verbunden, dessen einer Eingang über ein Invertierglied INV5 mit dem Takteingang TKT2 und dessen weitere Eingänge mit dem Ausgang eines weiteren EXNOR-Gliedes EXNOR3 über ein Invertierglied INV6, mit dem invertierenden Ausgang QB des Zwischenspeichers ZS4 sowie mit dem invertierenden Ausgang QB der Kippstufe KS verbunden sind.

Das EXNOR-Gatter EXNOR3 wird eingangsseitig einerseits mit dem Ausgang Q des Zwischenspeichers ZS10 und andererseits mit dem Ausgang Q des Zwischenspeichers ZS5 beaufschlagt. Der invertierende Ausgang QB des Zwischenspeichers ZS6 beaufschlagt ein weiteres OR-Gatter OR3, das außerdem eingangsseitig mit dem Ausgang des EXNOR-Gatters EXNOR3, dem invertierten Takteingang TKT3 und dem invertierenden Ausgang QB der Kippstufe KS beaufschlagt wird. Ausgangsseitig schließt sich an das OR-Gatter OR3 ein Eingang eines NAND-Gatters NAND3 an. Ein weiterer Eingang des NAND-Gatters NAND2 ist mit dem invertierten PRESET-Eingang verbunden. Der Ausgang des NAND-Gatters NAND2 führt auf den Setzeingang S der bistabilen Kippstufe BK. Mit den im Schaltungsteil AUS zusammengefaßten logischen Elementen kann durch Kombination der Anwenderbefehle X4 = 0, X5 = 1 und X6 = 0 das Ausgangssignal BP bei Auftreten eines Impulses am Takteingang TKT3 erzeugt werden.

Zur Untersuchung einer Untereinheit des zu untersuchenden digitalen Datenstroms kann das in den Bits X8 und X9 codierte Vergleichergebnis durch die Anwenderbefehle X0 bis X7 ausgewertet werden. Die Funktionsweise der Schaltung sei an einem Beispiel verdeutlicht:
Liegt beispielsweise die Kombination X0 = 0 und X1 = 1 (Iᵢ> Sᵢ?) an den Eingängen IN0 bzw. IN1 und damit nach dem Auftreten eines Impulses am Takteingang TKT0 auch an den Ausgängen Q der Zwischenspeicher ZS0 und ZS1 an, so wird durch diese Kombination der Eingang E2 des Zwischenspeicherbausteins ZBS gewählt. Vorausgesetzt, der Vergleich liefert als Ergebnis X9 = 0, X8 = 1 (Iᵢ > Sᵢ), so tritt am Eingang E2 entsprechend 0 und damit am invertierenden Ausgang YB des Zwischenspeicherbausteins ZBS 1 auf. Es sei angenommen, daß der Ausgang Q der bistabilen Kippstufe BK und der Ausgang Q der Kippstufe KS jeweils den initialisierten Wert 1 aufweisen. Tritt nun am Takteingang TKT1 ein dem weiteren Teilschritt zugeordneter Impuls auf (wie eingangs erwähnt z. B. nach 200 ns), so wird der Takteingang des Zwischenspeichers ZS10 mit einem Taktsignal beaufschlagt und dadurch die am Dateneingang D anliegende 1 auf den Ausgang Q durchgesteuert. Gleichzeitig ergibt sich am invertierenden Ausgang QB entsprechend 0. Das am Ausgang Q des Zwischenspeichers ZS2 anliegende Ausgangssignal ist dabei unbeachtlich - der Anwenderbefehl X2 bzw. das Ausgangssignal Q des Zwischenspeichers ZS2 ist nur dann beachtlich, wenn das Kriterium der Abfrage des Vergleichsergebnisses (Iᵢ = Sᵢ) oder (Iᵢ ≠ Sᵢ) lautet (s. Figur 2).

Ist nun Bit X8 = 0 (Iᵢ = Sᵢ), so liegt an beiden Eingängen des OR-Gatters OR1 der Zustand 0 und damit an einem Eingang des AND-Gatters AND1 ebenfalls 0 an. Damit gelangt kein Taktimpuls auf den Takteingang des Zwischenspeichers ZS10. Dadurch wird dafür gesorgt, daß auch bei dem gegenwärtigen Verfahrenszyklus Tᵢ unter der Fragestellung (Iᵢ > Sᵢ?) das während des vorhergehenden Verfahrenszyklus′ Tᵢ₋₁ gebildete Ausgangssignal Q des Zwischenspeichers ZS10 erhalten bleibt, da bei Gleichheit keine Aussage über das Verhältnis "größer" bzw. "kleiner" gemacht werden kann und sich damit die bisherige Ausgangsinformation MEᵢ₋₁ nicht ändern kann. Dies ist insbesondere dann von Vorteil, wenn eine Folge von Untereinheiten daraufhin untersucht werden soll, ob ihr Wert größer oder kleiner als der Wert der entspechenden Folge der Referenzwerte ist.

Wird an den Eingängen IN0 und IN1 jeweils der Wert 0 angelegt (X0 = 0, X1 = 0; vgl. Figur 2), so wird durch Wahl des Eingangs E0 des Speicherbausteins ZBS ebenfalls dafür gesorgt, daß der Ausgang Q des Zwischenspeichers ZS10 das während des vorhergehenden Verfahrenszyklus′ gebildete Ausgangssignal MEᵢ₋₁ auch für den gerade ablaufenden Verfahrenszyklus Tᵢ beim Auftreten eines Impulses am Takteingang TKT1 als Ausgangssignal MEᵢ übernimmt.

Gleichzeitig werden die Eingänge des NOR-Gatters NOR1 jeweils mit dem Wert 0 beaufschlagt, so daß über das NOR-Gatter NOR3 ein Eingang des NOR-Gatters NOR5 mit den Wert 0 beaufschlagt wird. Ein dem zusätzlichen Teilschritt zugeordneter Impuls am Takteingang TKT2 bewirkt, daß der Ausgang des NOR-Gatters NOR5 den Wert 1 annimmt und damit die bistabile Kippstufe BK zurücksetzt, so daß an deren Ausgang Q der Wert 0 auftritt (vorläufige Halteentscheidung). Dieser Zustand der bistabilen Kippstufe BK wird in gleicher Weise erreicht, wenn eines der weiteren NOR-Gatter NOR2 und NOR4 ausgangsseitig den Wert 1 annimmt. Das NOR-Gatter NOR2 nimmt ausgangsseitig den Wert 1 an, wenn die Eingänge IN0 und IN1 jeweils mit dem Wert 1 beaufschlagt werden - d. h. eine Abfrage auf Gleichheit bzw. Ungleichheit der Untereinheit mit dem zugeordneten Referenzwert - und die Ausgangsinformation MEᵢ den Wert 0 annimmt. Soll eine Folge von Untereinheiten auf Gleichheit oder absolute Ungleichheit mit einer Folge von Referenzwerten hin untersucht werden, steht das Ergebnis der Untersuchung fest, sobald eine Untereinheit ungleich zu ihrem entsprechenden Referenzwert ist; in diesem Fall wird dann durch das NOR-Gatter NOR2 automatisch eine vorläufige Halteentscheidung getroffen. Mit dem Anwenderbefehl X7, der auf den Eingang IN7 geführt ist und invertiert einen Eingang des NOR-Gatters NOR4 beaufschlagt, kann im Zusammenspiel mit dem Vergleichsergebnis X8, das invertiert auf den weiteren Eingang des NOR-Gatters NOR4 geführt ist, ebenfalls eine vorläufige Halteentscheidung realisiert werden. Hat das Bit X8 den Wert 1, und der Anwenderbefehl X7 ebenfalls den Wert 1, so tritt ausgangsseitig am NOR-Gatter NOR4 der Zustand 1 auf, der zu einem Rücksetzen der bistabilen Kippstufe BK führt. Mit dem Anwenderbefehl X7 kann also in Abhängigkeit des Vergleichsergebnisses X8 eine vorläufige Halteentscheidung erzeugt werden. Das ist beispielsweise dann zweckmäßig, wenn der Wert einer Folge von Untereinheiten hinsichtlich der Fragestellung untersucht wird, ob er größer als der Wert der entsprechenden Folge von Referenzwerten ist. Wird nämlich die erste Ungleichheit zwischen einer Untereinheit und dem zugeordneten Referenzwert festgestellt (X8 = 1), kann die Fragestellung beantwortet werden, sofern die Untereinheiten als MSBF-geordnet angesehen werden; dies wird durch den Anwenderbefehl X7 = 1 ausgedrückt. Durch die drei NOR-Gatter NOR1, NOR2 und NOR4 sind beispielhaft drei schaltungstechnische Möglichkeiten der Realisierung einer vorläufigen Halteentscheidung gegeben. Dabei ist zu bemerken, daß die NOR-Gatter NOR1 und NOR2 einen von der Fragestellung durch die Anwenderbefehle X0 bis X2 und, was das NOR-Gatter NOR2 angeht, von der Ausgangsinformation abhängigen Automatismus darstellen. Das NOR-Gatter NOR4 ist durch den Anwenderbefehl X7 beliebig steuerbar.

Der Wert des Anwenderbefehls X3 wird über die Zwischenspeicher ZS3 und ZS11 mit Auftreten des Taktimpulses am Takteingang TKT2 invertiert und als Freigabesignal SRᵢ über das NOR-Gatter NOR6 mit dem invertierten Ausgang des Zwischenspeichers ZS10 verknüpft. Damit ist die Freigabe der Ausgangsinformation MEᵢ steuerbar. Der Ausgangszustand des NOR-Gatters NOR6 wird mit dem folgenden Systemtakt, der am Eingang TKT0 auftritt, auf den Ausgang Q des Zwischenspeichers ZS12 als Prüfausgangssignal PS geführt.

In einem durch einen Impuls am Takteingang TKT3 ausgeführten ergänzenden Teilschritt des Verfahrens wird durch die Anwenderbefehle X4 bis X6 bestimmt, ob die Ausgangsinformation MEᵢ auch für die Untersuchung der folgenden Untereinheiten Iᵢ₊₁ ... Iₙ Bestand haben soll (vgl. Figur 3). Auch dieser Teilschritt sei an einem Beispiels verdeutlicht:

Die Eingänge IN4 und IN5 seien jeweils mit 1, der Eingang IN6 mit 0 beaufschlagt, und die Ausgangsinformation sei MEᵢ = 1. Damit ist der invertierende Ausgang QB des Zwischenspeichers ZS4 im Zustand 0, mit dem ein Eingang des OR-Gatters OR2 beaufschlagt wird. Der Ausgang Q des Zwischenspeichers ZS5 weist den Zustand 1 auf, mit dem ein Eingang des EXNOR-Gatters EXNOR3 beaufschlagt wird. Wie angenommen, liegt am Ausgang Q des Zwischenspeichers ZS10 die Ausgangsinformation MEᵢ = 1, so daß am Ausgang des EXNOR-Gatters EXNOR3 der Zustand 1 auftritt.

Über das Invertierglied INV6 invertiert ergibt sich damit am weiteren Eingang des OR-Gatters OR2 der Wert 0. Der invertierende Ausgang QB der Kippstufe KS habe den Wert 0. Beim Auftreten des Impulses am Takteingang TKT3 erhält durch die Invertierung über das Invertierglied INV5 auch der letzte Eingang des OR-Gatters OR2 den Wert 0, so daß am Takteingang der Kippstufe KS ein Taktimpuls auftritt, wodurch der Ausgang Q = 0 gesetzt wird, weil sich der Dateneingang D auf Massepotential befindet. Damit wird auch ein Eingang des AND-Gatters AND1 mit 0 beaufschlagt, so daß kein Taktimpuls mehr auf den Takteingang des Zwischenspeichers ZS10 gelangt und somit die Ausgangsinformation MEᵢ (angenommen mit 1) unabhängig von allen weiteren Untersuchungen beibehalten wird (endgültige Halteentscheidung). Die OR-Gatter OR2 und OR3 werden durch die Rückkopplung des invertierenden Ausgangs QB der Kippstufe KS ausgangsseitig auf den Zustand 1 festgelegt. Dieser Zustand läßt sich nur durch ein PRESET-Signal am PRESET-Eingang aufheben, mit dem der Ausgang Q der bistabilen Kippstufe BK und der Ausgang Q der Kippstufe KS jeweils wieder den Zustand 1 annehmen (Initialisierung).

Ist nun entgegen der Annahme das Ausgangssignal MEᵢ = 0, so führt dieser Wert 0 am Eingang des EXNOR-Gliedes EXNOR3 dazu, daß zumindest der mit dem Invertierglied INV6 verbundene Eingang des OR-Gatters OR2 den Wert 1 erhält, wodurch der Ausgang des OR-Gatters OR2 stets den Zustand 1 annimmt, so daß auch beim Auftreten eines Taktimpulses am Takteingang TKT3 kein Signal auf den Takteingang der Kippstufe KS gelangt. Damit ist das Ausgangssignal MEᵢ₊₁ bei der Untersuchung einer folgenden Untereinheit Iᵢ₊₁ in einem folgenden Verfahrenszyklus Tᵢ₊₁ von dem Vergleichsergebnis X8, X9 und den Anwenderbefehlen X0 bis X2 abhängig, sofern sich die bistabile Kippstufe BK im Zustand Q = 1 befindet. Werden sämtliche Eingänge IN4, IN5 und IN6 mit dem Wert 0 beaufschlagt, wird in diesem Teilschritt keine Operation ausgeführt (no operation) und der Filterbaustein F1 verbleibt in seinem bisherigen Zustand.

Der eine vorläufige Halteentscheidung repräsentierende zuvor beschriebene Zustand der bistabilen Kippstufe BK (Ausgang Q = 0) kann im folgenden bzw. in einem der folgenden Verfahrenszyklen Tᵢ₊₁...Tₙ durch entsprechende Anwenderbefehle X4 bis X6 (s. Figur 3) wieder aufgehoben werden. Durch die Kombination der Anwenderbefehle X4 = 0, X5 = 1 und X6 = 1 (unter der Annahme MEᵢ = 0) läßt sich der Zustand der bistabilen Kippstufe BK ändern. Über den Ausgang Q des Zwischenspeichers ZS5 wird das EXNOR-Gatter EXNOR3 eingangsseitig mit 1 und eingangsseitig mit MEᵢ = 0 beaufschlagt, so daß an seinem Ausgang und damit an einem Eingang des OR-Gatters OR3 0 auftritt. Auch der mit dem invertierenden Ausgang QB des Zwischenspeichers ZS6 verbundene Eingang des OR-Gatters OR3 wird mit dem Wert 0 beaufschlagt; ebenso wie der mit dem Ausgang QB der Kippstufe KS verbundene Eingang (keine endgültige Halteentscheidung). Ein Taktimpuls über den Eingang TKT3 bewirkt dann den Zustand 0, der auf einen Eingang des NAND-Gatters NAND2 gelangt und damit den Setzeingang S der bistabilen Kippstufe BK beaufschlagt und diese in den gesetzten Zustand zurückführt, d. h. der Ausgang Q erhält (wieder) den Wert 1. Damit ist das AND-Gatter AND1 nicht mehr auf den Ausgangszustand 0 festgesetzt. Mit dieser Anordnung der OR-Gatter OR2 und OR3 in Verbindung mit dem EXNOR-Gatter EXNOR3 sind in gleicher Weise die in der Figur 3 dargestellten "WENN ... DANN" "ANDERNFALLS"-Anweisungen realisiert.

## Patentansprüche

1. Verfahren zur Untersuchung und Beurteilung eines digitalen Datenstromes hinsichtlich der Erfüllung oder Nichterfüllung charakteristischer Merkmale,
- bei dem der Datenstrom in jeweils aus einer Anzahl digitaler Daten (Bits) bestehende Untereinheiten (Iₒ ... Iₙ) unterteilt wird,
- bei dem die Untersuchung und Beurteilung aufeinanderfolgender Untereinheiten (Iₒ...Iₙ) jeweils innerhalb aufeinanderfolgender Verfahrenszyklen (Tₒ...Tₙ) erfolgt, wobei jeder Verfahrenszyklus (Tₒ ... Tₙ) mehrere Teilschritte enthält und wobei mit jedem Verfahrenszyklus (Tₒ...Tₙ) eine Ausgangsinformation (MEₒ...MEₙ) gebildet wird, indem
a) in einem Teilschritt (MS0) eines Verfahrenszyklus′ (z. B. Tᵢ) ein Vergleich einer Untereinheit (z. B. Iᵢ) mit einem zugeordneten Referenzwert (z. B. Sᵢ) hinsichtlich vorgebbarer Kriterien vorgenommen wird und das Vergleichsergebnis (X8, X9) bereitgestellt wird,
b) in einem weiteren Teilschritt (MS1) des einen Verfahrenszyklus′ (Tᵢ) entweder durch Anwenderbefehle (X0, X1) einerseits die Ausgangsinformation (MEᵢ₋₁) des vorhergehenden Verfahrenszyklus′ (Tᵢ₋₁) als Ausgangsinformation (MEᵢ) übernommen und andererseits eine vorläufige Halteentscheidung getroffen wird, wodurch diese Ausgangsinformation (MEᵢ) als Ausgangsinformation (MEᵢ₊₁...) für folgende Verfahrenszyklen (Tᵢ₊₁...) erhalten wird, odersofern keine Halteentscheidung aus einem der vorhergehenden Verfahrenszyklen (Tₒ...Tᵢ₋₁) Bestand hat - das Vergleichsergebnis (X8, X9) hinsichtlich einer durch Anwenderbefehle (X0, X1, X2) auswählbaren Fragestellung abgefragt und das Ergebnis dieser Abfrage als Ausgangsinformation (MEᵢ) des einen Verfahrenszyklus′ (Tᵢ) bereitgestellt wird,
c) in einem zusätzlichen Teilschritt (MS2) in Abhängigkeit von der Ausgangsinformation (MEᵢ) des einen Verfahrenszyklusl (Tᵢ), der Fragestellung gemäß dem weiteren Teilschritt (MS1), dem Vergleichsergebnis (X8) und einem weiteren Anwenderbefehl (X7) bestimmt wird, ob die vorläufige Halteentscheidung getroffen wird, wodurch die Ausgangsinformation (MEᵢ) des einen Verfahrenszyklus′ (Tᵢ) als Ausgangsinformation (MEᵢ₊₁) für folgende Verfahrenszyklen (Tᵢ₊₁...) erhalten wird,
d) in einem ergänzenden Teilschritt (MS3) durch zusätzliche Anwenderbefehle (X4, X5, X6) in Abhängigkeit von der Ausgangsinformation (MEᵢ) des einen Verfahrenszyklus′ (Tᵢ) entweder bestimmt wird, daß die Ausgangsinformation (MEᵢ) für alle folgenden Verfahrenszyklen (Tᵢ₊₁ ... Tₙ) endgültig Bestand haben soll (endgültige Halteentscheidung), oder bestimmt wird, ob eine zuvor getroffene vorläufige Halteentscheidung für den folgenden Verfahrenszyklus (Tᵢ₊₁) aufgehoben wird oder nicht.

2. Verfahren nach Anspruch 1,
**dadurch gekennzeichnet**, daß
die durch die Anwenderbefehle (X0, X1, X2) auswählbare Fragestellung aus den Fragestellungen, ob die jeweilige Untereinheit (Iᵢ) "gleich", "ungleich", "größer" oder "kleiner" als der jeweilige Referenzwert (Sᵢ) ist, ausgewählt wird.

3. Verfahren nach Anspruch 1 oder 2,
**dadurch gekennzeichnet**, daß
in einem der Teilschritte (MS1, MS2, MS3) ein Anwenderbefehl (X3) als Freigabesignal (SRᵢ) für die Ausgangsinformation (MEᵢ) wirksam wird, indem eine Bool'sche Verknüpfung mit der Ausgangsinformation (MEᵢ) erfolgt.

4. Verfahren nach einem der Ansprüche 1 bis 3,
**dadurch gekennzeichnet**, daß
die Summe der zeitlichen Dauer der Teilschritte (MS0 ... MS3) die Dauer eines Systemtaktes nicht überschreitet.

5. Verfahren nach einem der Ansprüche 1 bis 4,
**dadurch gekennzeichnet**, daß
für die Dauer der Teilschritte (MS0 ... MS3) jeweils gleiche Bruchteile der Dauer des Verfahrenszyklus′ (Tᵢ) vorgesehen werden.

6. Verfahren nach einem der vorangehenden Ansprüche,
**dadurch gekennzeichnet**, daß
das Vergleichsergebnis (X8, X9) und die Anwenderbefehle (X0... X7) in dem einen Teilschritt (MS0) des einen Verfahrenszyklus′ (Tᵢ) in Zwischenspeichern (ZS0...ZS9) zwischengespeichert werden.

## Claims

1. Method for analysing and assessing a digital data stream with regard to the fulfilment or non-fulfilment of characteristic features,
- in which the data stream is subdivided into subunits (Iₒ ... Iₙ) respectively comprising a number of digital data (bits),
- in which the analysis and assessment of successive subunits (Iₒ ... Iₙ) are respectively performed within successive method cycles (Tₒ ... Tₙ), each method cycle (Tₒ ... Tₙ) containing a plurality of partial steps and an item of output information (MEₒ ... MEₙ) being formed with each method cycle (Tₒ ... Tₙ), owing to the fact that
a) in one partial step (MS0) of a method cycle (e.g. Tᵢ) a comparison of a subunit (e.g. Iᵢ) with an assigned reference value (e.g. Sᵢ) is undertaken with regard to prescribable criteria and the result (X8, X9) of comparison is provided,
b) in a further partial step (MS1) of one method cycle (Tᵢ) either by means of user commands (X0, X1), on the one hand the output information (MEᵢ₋₁) of the preceding method cycle (Tᵢ₋₁) is taken over as output information (MEᵢ), and on the other hand a provisional stop decision is taken, as a result of which this output information (MEᵢ) is obtained as output information (MEᵢ₊₁...) for following method cycles (Tᵢ₊₁...), or - if no stop decision from one of the preceding method cycles (Tₒ ... Tᵢ₋₁) endures - the result (X8, X9) of comparison is interrogated with regard to a question which can be selected by user commands (X0, X1, X2) and the result of this interrogation is provided as output information (MEᵢ) of one method cycle (Tᵢ),
c) it is determined in an additional partial step (MS2) as a function of the output information (MEᵢ) of one method cycle (Tᵢ), of the question in accordance with the further partial step (MS1), of the result (X8) of comparison and of a further user command (X7), whether the provisional stop decision has been taken, as a result of which the output information (MEᵢ) of one method cycle (Tᵢ) is obtained as output information (MEᵢ₊₁) for following method cycles (Tᵢ₊₁...), and
d) in a supplementary partial step (MS3), it is determined by means of additional user commands (X4, X5, X6) as a function of the output information (MEᵢ) of one method cycle (Tᵢ) either that the output information (MEᵢ) is finally to endure for all the following method cycles (Tᵢ₊₁ ... Tₙ) (final stop decision), or it is determined whether or not a previously taken stop decision is cancelled for the following method cycle (Tᵢ₊₁).

2. Method according to Claim 1, characterized in that the question which can be selected by the user commands (X0, X1, X2) is selected from the questions of whether the respective subunit (Iᵢ) is "equal to", "not equal to", "greater than" or "less than" the respective reference value (Sᵢ) .

3. Method according to Claim 1 or 2, characterized in that in one of the partial steps (MS1, MS2, MS3) a user command (X3) becomes active as enable signal (SRᵢ) for the output information (MEᵢ) owing to the fact that a Boolean operation is performed using the output information (MEᵢ).

4. Method according to one of Claims 1 to 3, characterized in that the sum of the temporal duration of the partial steps (MS0 ... MS3) does not exceed the duration of a system clock.

5. Method according to one of Claims 1 to 4, characterized in that equal fractions of the duration of the method cycle (Tᵢ) are respectively provided for the duration of the partial steps (MS0 ... MS3).

6. Method according to one of the preceding claims, characterized in that the result (X8, X9) of comparison and the user commands (X0 ... X7) in one partial step (MS0) of one method cycle (Tᵢ) are buffered in buffers (ZS0 ... ZS9).

## Revendications

1. Procédé pour rechercher si un flux numérique de données respecte ou ne respecte pas des particularités caractéristiques et pour en juger,
- dans lequel on subdivise le flux de données en sous-unités (I₀ ... Iₙ) constituées chacune d'une pluralité de données (bits) numériques,
- dans lequel on effectue l'examen et le jugement de sous-unités (I₀ ... Iₙ) successives pendant des cycles (T₀ ... Tₙ) successifs du procédé, chaque cycle (T₀ ... Tₙ) du procédé comprenant plusieurs étapes partielles et une information (ME_{O} ... MEₙ) de sortie étant formée à chaque cycle (T_{O} ... Tₙ) du procédé par le fait que
a) on effectue lors d'une étape partielle (MS0) d'un cycle (par exemple Tᵢ) du procédé une comparaison d'une sous-unité (par exemple Iᵢ) à une valeur (par exemple Sᵢ) associée de référence du point de vue de critères pouvant être prescrits et on fournit le résultat (X8, X9) de la comparaison,
b) on prend en charge, au cours d'une autre étape partielle (MS1) de l'un (Tᵢ) des cycles du procédé, soit par des instructions (X0, X1) de l'utilisateur d'une part l'information (MEᵢ₋₁) de sortie du cycle (Tᵢ₋₁) précédent du procédé en tant qu'information (MEᵢ) de sortie et on prend d'autre part une décision préalable de maintien, ce qui conserve cette information (MEᵢ) de sortie en tant qu'information (MEᵢ₊₁ ...) de sortie pour des cycles (Tᵢ₊₁ ...) suivant du procédé, soit, dans la mesure où aucune décision de maintien n'a persisté à partir de l'un des cycles (T₀, ... Tᵢ₋₁) précédent du procédé, on interroge le résultat (X8, X9) de comparaison du point de vue d'une question posée que l'on peut sélectionner par des instructions (X0, X1, X2) de l'utilisateur et on fournit le résultat de cette interrogation en tant qu'information (MEᵢ) de sortie de l'un (Tᵢ) des cycles du procédé,
c) on détermine, dans une étape partielle supplémentaire (MS2), en fonction de l'information (MEᵢ) de sortie de l'un (Tᵢ) des cycles du procédé, de la question posée suivant l'étape partielle (MS1) supplémentaire, du résultat (X8) de la comparaison et d'une autre instruction (X7) de l'utilisateur, si la décision préalable de maintien est prise, ce qui conserve l'information (MEᵢ) de sortie de l'un (Tᵢ) des cycles du procédé en tant qu'information (MEᵢ₊₁) de sortie pour les cycles (Tᵢ₊₁ ...) suivants du procédé,
d) on détermine dans une étape partielle complémentaire (MS3), par des instructions (X4, X5, X6) supplémentaires de l'utilisateur, en fonction de l'information (MEᵢ) de sortie de l'un (Tᵢ) des cycles du procédé, soit que l'information (MEᵢ) de sortie doit persister définitivement (décision définitive de maintien) pour tous les cycles (Tᵢ₊₁ ... Tₙ) suivants du procédé, soit si une décision préalable de maintien prise auparavant est annulée ou non pour le cycle (Tᵢ₊₁) suivant du procédé.

2. Procédé suivant la revendication 1,
caractérisé en ce que l'on sélectionne la question posée, que l'on peut choisir par les instructions (X0, X1, X2) de l'utilisateur, parmi les questions de savoir si la sous-unité respective (Iᵢ) est "égale", "non égale", "supérieure" ou "inférieure" à la valeur (Sᵢ) respective de référence.

3. Procédé suivant la revendication 1 ou 2,
caractérisé en ce que
dans l'une des étapes partielles (MS1, MS2, MS3), une instruction (X3) de l'utilisateur devient active en tant que signal (SRᵢ) de libération pour l'information (MEᵢ) de sortie par le fait que l'on effectue une combinaison booléenne avec l'information (MEᵢ) de sortie.

4. Procédé suivant les revendications 1 à 3,
caractérisé en ce que
la somme de la durée des étapes partielles (MS0 ... MS3) n'excède pas la durée d'une cadence de système.

5. Procédé suivant l'une des revendications 1 à 4,
caractérisé en ce que
on prévoit pour la durée des étapes partielles (MS0 ... MS3) des fractions égales de la durée du cycle (Tᵢ) du procédé.

6. Procédé suivant l'une des revendications précédentes,
caractérisé en ce que
on mémorise temporairement le résultat (X8, X9) de comparaison et les instructions (X0 ... X7) de l'utilisateur dans l'une (MS0) des étapes partielles de l'un (Tᵢ) des cycles du procédé dans des mémoires intermédiaires (ZS0 ... ZS9).
